**Europäisches Patentamt**

(19) **European Patent Office**

**Office européen des brevets**

(11) Veröffentlichungsnummer: **0 076 907**

**B1**

(12) # EUROPÄISCHE PATENTSCHRIFT

(45) Veröffentlichungstag der Patentschrift:
04.06.86

(51) Int. Cl.⁴: **B 64 C 3/14**

(21) Anmeldenummer: **82107512.4**

(22) Anmeldetag: **18.08.82**

(54) **Profile, insbesondere Tragflügelprofile für Luftfahrzeuge.**

(30) Priorität: **10.10.81 DE 3140350**

(43) Veröffentlichungstag der Anmeldung:
**20.04.83 Patentblatt 83/16**

(45) Bekanntmachung des Hinweises auf die Patenterteilung:
**04.06.86 Patentblatt 86/23**

(84) Benannte Vertragsstaaten:
**FR GB IT SE**

(56) Entgegenhaltungen:
**EP - A - 0 068 121**
**WO - A - 81/02557**
**FR - A - 2 159 422**
**FR - A - 2 302 910**
**FR - A - 2 314 096**
**FR - A - 2 384 671**

(73) Patentinhaber: **DORNIER GMBH, Postfach 1420,
D-7990 Friedrichshafen1 (DE)**

(72) Erfinder: **Lotz, Michael, Dr.-Ing., verstorben (DE)**
Erfinder: **Vanino, Rüdiger, verstorben (DE)**
Erfinder: **Kühl, Peter, Reutenenweg 2,
D-7997 Immenstaad (DE)**
Erfinder: **Welte, Dieter, Dipl.-Ing., Drossel-weg 31,
D-7778 Markdorf (DE)**
Erfinder: **Zimmer, Herbert, Dipl.-Ing., Virchowstrasse 21,
D-7990 Friedrichshafen (DE)**

(74) Vertreter: **Landsmann, Ralf, Dipl.-Ing., Kleeweg 3,
D-7990 Friedrichshafen 1 (DE)**

ACTORUM AG

**Beschreibung**

Die Erfindung betrifft ein Profil, insbesondere Tragflügelprofil für Luftfahrzeuge, ausgehend von einer Auslegungsmachzahl zwischen 0,2 und 0,9 und im Hochgeschwindigkeitsbereich mit einem nutzbaren Auftriebsbeiwert zwischen −0,1 und 1,5 bzw. im Niedergeschwindigkeitsbereich mit einem Auftriebsbeiwert bis 2,5.

Überkritische Tragflügelprofile zeichnen sich dadurch aus, dass auf einem Teil ihrer Kontur schon Überschallströmung herrscht, während die Anströmung selbst mit hoher Unterschallgeschwindigkeit erfolgt.

Wenn es gelingt, die Überschallgeschwindigkeit verlustarm, d.h. mit einem schwachen Stoss oder in bestimmten Fällen auch stossfrei auf Unterschallgeschwindigkeit im hinteren Profilteil zu verzögern, indem man dem Profil eine besondere Formgebung verleiht, so ergibt sich gegenüber den bisher üblichen, konventionellen Profilen ein Vorteil. Dieser kann so genutzt werden, dass bei gegebener Machzahl ein superkritisches Profil dicker sein kann als ein konventionelles, was sich in einem verringerten Strukturgewicht oder in einem grösseren nutzbaren Teibstoffvolumen auswirkt, oder bei gleicher Flügeldicke kann eine grössere Flugmachzahl erreicht werden. In beiden Fällen ist eine deutliche Steigerung der Flugleistung möglich.

Nachdem in der Anfangszeit der transsonischen Aerodynamik überkritische Tragflügelprofile vorwiegend empirisch entwickelt wurden, liegen seit einigen Jahren theoretische Berechnungsverfahren vor, mit denen überkritische Tragflügelprofile für einen bestimmten Betriebspunkt mit grosser Genauigkeit entworfen und im interessierenden Anstellwinkel- und Machzahlbereich nachgerechnet werden können.

Solche überkritischen Tragflügelprofile sind bereits in mehreren Ausführungsformen bekannt geworden. Entsprechend den verschiedenen Formgebungen bilden sich bei den bekannten überkritischen Tragflügelprofilen im Entwurfspunkt verschiedene Typen von Druckverteilungen auf der Profilober- und Profilunterseite aus. Im wesentlichen sind drei Entwicklungsrichtungen zu erkennen, und zwar ist einmal die Druckverteilung des Überschallfeldes der Profiloberseite, welches sich über einen recht grossen Bereich der Profiltiefe erstreckt, annähernd konstant (Roof-Top-Profile), dann kann sie auch von einer recht hohen Saugspitze im Nasenbereich etwa linear abfallen (Peaky-Profile), und schliesslich wird in der dritten Entwicklungsrichtung versucht, die Vorteile beider Profiltypen in einem Profil zu vereinigen.

Die erste Entwicklungsrichtung ist aus der DE-OS 2 254 888 bekannt. Das Überschallfeld der Profiloberseite wird dabei durch einen Verdichtungsstoss abgeschlossen, der vom Entwurf her recht schwach ist und relativ weit hinten liegen kann. Es kann mit diesem Profiltyp ein relativ hoher Auftriebsbeiwert erreicht werden. Nachteile sind allerdings, dass das kopflastige Nickmoment recht hoch ist und dass bei Überschreitung der Auslegemachzahl die Grenze des Widerstandsanstieges schnell erreicht wird. Denn infolge der weit hinten liegenden Stosslage und damit notwendiger steiler Druckgradienten ist der hintere Profilbereich stark belastet, und die Ablösegrenze der Grenzschicht wird bald erreicht. Da dieser Profiltyp einen relativ grossen Nasenradius aufweist, ist auch das Verhalten im Niedergeschwindigkeitsbereich günstig, denn die Neigung zur Strömungsablösung an der Profilnase wird herabgesetzt.

Die zweite Entwicklungsrichtung kann z.B. aus der DE-OS 2 608 414 bzw. DE-OS 2 626 276 entnommen werden. Dabei wird das Überschallfeld mit einer recht hohen Saugspitze im Nasenbereich ohne Stoss durch isentrope Rekompression abgeschlossen. Daraus ergeben sich bei diesem Profiltyp ein geringer Widerstand im Auslegungspunkt und ein relativ grosser Abstand zur Grenze des Widerstandsanstieges. Nachteilig ist allerdings, dass im Auslegungspunkt ein nicht so grosser Auftriebsbeiwert erreicht werden kann wie bei der zuerst genannten Profilausbildung und dass bei zunehmender Flugmachzahl und/ oder Anstellung sofort ein Verdichtungsstoss mit zunehmender Stärke am Ende des Überschallgebietes auftritt, welcher ein nicht lineares Verhalten des Nickmomentes verursachen kann. Diese Profile müssen einen relativ dicken Nasenbereich aufweisen, um die Saugspitze des Überschallgebietes zu erzeugen. Im Niedergeschwindigkeitsbereich wird diese Saugspitze entsprechend verstärkt, so dass das Hochauftriebsverhalten dieser Profile durch vorzeitige Nasenablösung ungünstig beeinflusst werden kann.

Mit der dritten Entwicklungsrichtung wird, wie aus der DE-OS 2 712 717 hervorgeht, eine Kombination der günstigen Eigenschaften der vorangehend angegebenen Profiltypen unter Vermeidung der angegebenen Nachteile angestrebt. – Es soll die Eigenschaft des hohen Auftriebsbeiwertes der «Roof-Top-Profile» mit dem günstigen Widerstandsverhalten der «Peaky-Profile» an einem Profil verwirklicht werden. Dabei werden in einem gewissen Bereich um den Auslegungspunkt günstige aerodynamische Eigenschaften erzielt.

Von grosser Bedeutung für die Entwicklung und Analyse von überkritischen Tragflügelprofilen sind die Grenzkurven des Auftriebes. Es ist dabei unterhalb der Machzahl von etwa 0,7 die Grenzkurve des Maximalauftriebes von Bedeutung, welche die Grenze des nutzbaren Profilauftriebes bildet. Sie wird durch die Ablösung der Profilströmung gesetzt. Über der Machzahl von etwa 0,7 geht die Grenze des Maximalauftriebes in die Buffetinggrenze über. Dies ist die Auftriebsgrenze im transsonischen Bereich, wobei im hinteren Profilbereich stossinduzierte und im allgemeinen instationäre Grenzschichtablösung auftritt. Der Widerstand ist hierbei schon so gross, dass ein stationärer Flug an dieser Grenze im allgemeinen nicht möglich ist. Die aerodynamischen Eigenschaften des Profils sollten an der Buffetinggrenze jedoch gutmütig sein, da diese Grenze bei instationären Flugbewegungen durchaus erreicht werden kann. (Das Profil nach DE-OS 2 712 717 ist ein Tragflügelprofil für Luftfahrzeuge mit einer Auslegungs-Machzahl bis ca. 0,85, bei dem an der Profiloberseite auf dem Konturbereich, längs dem Überschallgeschwindigkeit der Strömung auftreten kann, die Änderung des Krümmungsverlaufes gering ist, wobei in diesen Bereich ein Rekompressionsbereich mit einem Krümmungsmaximum und mit einem dahinterliegenden Wendepunkt anschliesst. Die Krümmungsverlauf-Funktion weist im hinteren Bereich der Profiloberseite weitere Wendepunkte auf. An der Profilunterseite besitzt das bekannte Profil einen Bereich geringer Änderung des Krümmungsverlaufes, der ohne ausgeprägtes Krümmungsmaximum in einen Rekompressionsbereich und in einen anschliessenden Krümmungsverlauf mit einem Wendepunkt übergeht.)

Von besonderer Bedeutung ist ferner die Grenze des Widerstandsanstieges. Unterhalb dieser Grenze kann zwar schon ein Überschallgebiet auftreten, aber die Rekompression geschieht so verlustarm, dass noch kein Widerstandsanstieg erfolgt. Wird dagegen der Anstellwinkel bzw. der Auftrieb oder die Anströmungsmachzahl so weit erhöht, dass infolge der Zunahme der Stossstärke der Druckwiderstand bereits um einen geringen, definierten Betrag gegenüber dem Referenzwert ansteigt, wird diese Grenzkurve erreicht. Sie ist für den stationären Flug von grosser Bedeutung, und die Lage dieser Grenzkurve ist ein wichtiges Mass für die Flugleistung eines Fluggerätes. Bei der Profilentwicklung wird daher angestrebt, bei gegebener Machzahl eine bei möglichst hohem Auftriebsbeiwert liegende Grenze des Widerstandsanstieges zu erzielen.

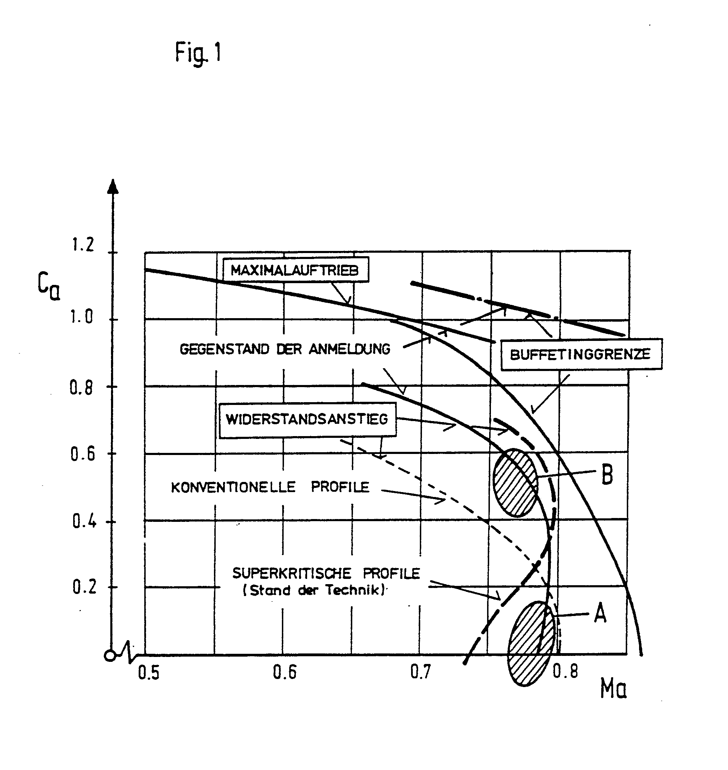

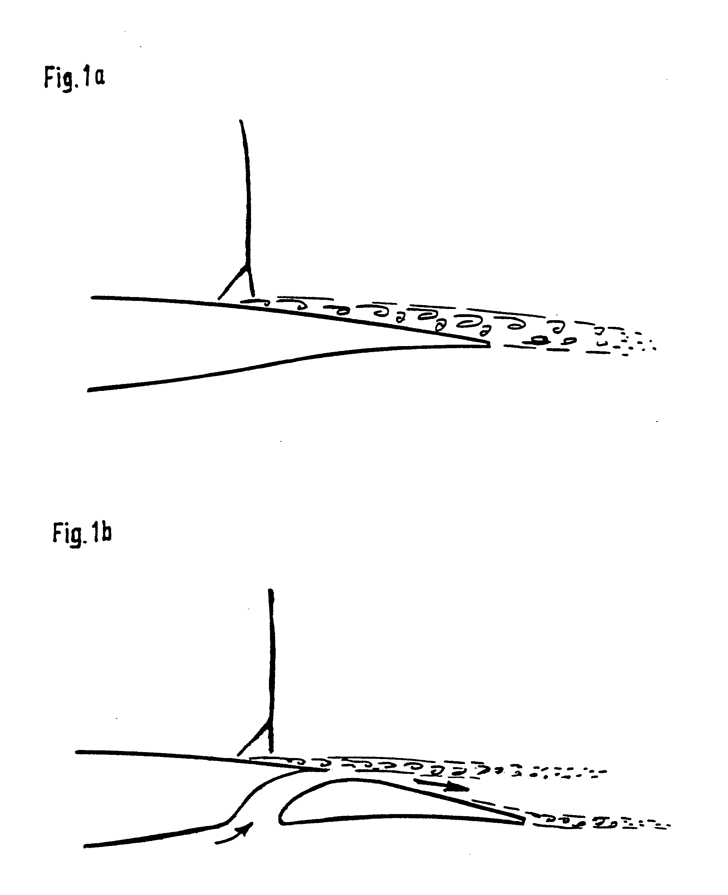

Wenn ein Flugzeug mit hoher Machzahl sowohl bei sehr kleinem Auftrieb (Bereich A nach Fig. 1) als auch bei möglichst hohem Auftrieb (Bereich B nach Fig. 1) gute Flugleistungen aufweisen und daneben eine hochliegende Buffetinggrenze mit einem gutmütigen Flugverhalten haben soll, sind die bisherigen überkritischen und konventionellen Profile nicht brauchbar, denn bei den letzteren ist der erzielbare Auftrieb zu gering und bei den bekannten überkritischen Profilen ist das kopflastige Nickmoment zu gross und ferner ist ihre Unterseite für eine überkritische Umströmung nicht geeignet, ebenso ist ihr nutzbarer Auftrieb an der Buffetinggrenze zu niedrig.

Gegenüber den bekannten Profilausbildungen ist es Aufgabe der vorliegenden Erfindung, ein Profil, und zwar ein überkritisches Profil der zweiten Generation zu schaffen, mit möglichst hoher Machzahl des Widerstandsanstieges bei kleinem Auftriebsbeiwert, etwa wie bei konventionellen Profilen, und möglichst hohem Auftrieb bei hoher Machzahl, etwa wie bei bekannten superkritischen Profilen und mit möglichst hohem Auftrieb an der Buffetinggrenze bei gutmütigem Flugverhalten. Ferner soll das Profil eine Verringerung des kopflastigen Nickmomentes zur Verminderung der Trimmverluste und eine Ausbildung des Nasenbereichs aufweisen, mit dem auch im Niedergeschwindigkeitsbereich ein günstiges Hochauftriebsverhalten erzielt werden kann.

Die gestellte Aufgabe ist erfindungsgemäss dadurch gelöst, dass

a) an der Profiloberseite auf dem Konturbereich von angenähert 26% bis 53% der Profiltiefe, längs dem Überschallgeschwindigkeit der Strömung auftreten kann, die Krümmung sich im Bereich von −0,2 bis −0,4 ändert, dass ferner an der Profilunterseite auf dem Konturbereich von angenähert 12,5% bis 34% der Profiltiefe, auf dem Überschallgeschwindigkeit der Strömung auftreten kann, die Krümmung sich im Bereich von −0,5 bis −0,6 ändert, dass

b) an diese Bereiche jeweils Rekompressionsbereiche mit je einem deutlichen Krümmungsmaximum von angenähert K = −0,6 anschliessen und dass dieses Krümmungsmaximum auf der Oberseite angenähert bei 57% der Profiltiefe und auf der Unterseite angenähert bei 34% der Profiltiefe liegt und dass sowohl an der Profilober- als auch an der Profilunterseite der jeweilige Rekompressionsbereich je zwei Wendepunkte des Krümmungsverlaufs enthält, wobei sowohl an der Profilober- als auch an der Profilunterseite der erste Krümmungswendepunkt im Abstand von angenähert 2% bis 5% der Profiltiefe hinter dem genannten Krümmungsmaximum liegt, und dass der zweite Krümmungswendepunkt im Abstand von angenähert 10% bis 16% der Profiltiefe hinter dem genannten Krümmungsmaximum liegt und dass

c) im Anschluss an das Rekompressionsgebiet der Profiloberseite ein unter Reiseflugbedingungen geschlossener und unter Manöver- bzw. Langsamflugbedingungen geöffneter Strömungsspalt einstellbar ist.

Bei der erfindungsgemässen Ausbildung der Profile mit Auslegung der Profilunterseite nach den gleichen Kriterien, wie sie für die Profiloberseite gelten, weisen die Profile im entscheidenden Rekompressionsgebiet, d.h. in dem Gebiet, in dem die Überschallströmung auf Unterschallgeschwindigkeit verzögert wird, auf Ober- und Unterseite die gleichen Konturmerkmale auf, nämlich ein ausgeprägtes Krümmungsmaximum mit zwei in kurzem Abstand folgenden Krümmungswendepunkten (K=Krümmung). Damit werden eine Verminderung der Stossstärke und eine Stabilisierung der Lage des Stosses erreicht. Der Teil der Profilkonturen, längs denen ein Überschallgebiet auftreten kann, ist durch eine relativ geringe Krümmung gekennzeichnet, wie von der Oberseitenausbildung der überkritischen Profile der ersten Generation her bekannt.

Die Forderung nach einem möglichst hohen nutzbaren Auftrieb an der Buffetinggrenze bei gutmütigem Flugverhalten wird erfüllt durch die Möglichkeit der Spaltbildung, wobei der Spalt hinter dem Rekompressionsgebiet der Oberseite liegt und wobei das Rekompressionsgebiet durch das Krümmungsmaximum sowie die zwei Wendepunkte bestimmt ist. Durch die Spaltströmung wird das Gebiet der abgelösten Strömung hinter dem Gabelstoss verkleinert, und die Oberseitenströmung der Klappe wird weitgehend zum Anliegen gebracht. Hierdurch wird eine bedeutende Erhöhung des nutzbaren Auftriebes bei verringertem Schütteln und Verbesserung des Flugverhaltens erzielt. Die Forderung nach einem geringeren kopflastigen Nickmoment wird dadurch erfüllt, dass der hintere Profilbereich entlastet und der vordere stärker belastet wird. Dazu wird die Krümmung im hinteren Bereich verringert und im vorderen Bereich so modifiziert, dass die Krümmung der Unterseite geringer ist als die der Oberseite.

Die Forderung nach einem hohen Maximalauftrieb im Niedergeschwindigkeitsbereich wird erfüllt durch den Krümmungsverlauf von Profilober- und Profilunterseite im vorderen Bereich, wodurch sich eine günstige Nasenwölbung ergibt.

In der Zeichnung ist ein Ausführungsbeispiel gezeigt, dass nachfolgend näher beschrieben ist.

Figur 1 zeigt in einem Diagramm Kennlinienverläufe des Auftriebes über der Machzahl im Vergleich gegenüber bekannten Profilausbildungen,

Fig. 1a, 1b die Strömungsverhältnisse an einem erfindungsgemäss ausgebildeten Profil in einem Vergleich mit und ohne Spaltströmung in bezug auf die Buffetinggrenze,

Fig. 2 zeigt die Kennlinie des Profildickenverlaufes (Profiltropfen) und der Profilwölbung (Skelettlinie),

Fig. 3 zeigt den Verlauf der Konturkrümmung von Profilober- und Profilunterseite, die

Fig. 4 bis 6 zeigen die Druckverteilungen an Profilober- bzw. Profilunterseite gemäss der vorliegenden Ausführung (ausgezogene Linien) im Vergleich zu bekannten Profilen (gestrichelte Linien), bei aufsteigender Machzahl und einem Auftrieb nahe Null,

Fig. 7 zeigt Druckverteilungen an Profilober- bzw. Profilunterseite bei hoher Machzahl und hohem Auftrieb im Vergleich mit einem bekannten Profil (gestrichelte Linien),

Fig. 8 zeigt Druckverteilungen der vorliegenden Profilausführung bei hohem Auftrieb und aufsteigender Machzahl,

Fig. 9 zeigt die Druckverteilung der Profilausbildung in der Nähe des Maximalauftriebes bei Machzahl M = 0,5 und

Fig. 10 zeigt die Druckverteilung bei Anordnung eines Strömungsspaltes an der Buffetinggrenze nach Fig. 1b.

Fig. 1 lässt erkennen, wie sich der Widerstandsanstieg der bisher bekannt gewordenen überkritischen Tragflügelprofile der ersten Generation von dem konventioneller Profile unterscheidet. So zeigt z.B. diese Figur, dass konventionelle Profile (dünne gestrichelte Linie) bei kleinen Auftriebsbeiwerten in der Nähe von Null (Bereich A) eine recht hohe Machzahl erreichen können, bis die Grenze des Widerstandsanstieges erreicht wird. Bei zunehmendem Auftrieb fällt diese Grenze dann allerdings schnell zu kleineren Machzahlen hin ab, so dass der Bereich B mit konventionellen Profilen nicht erreicht werden kann. Dies wird jedoch mit den bisher bekannt gewordenen überkritischen Profilen ermöglicht. Wie die Grenzkurve des Widerstandsanstieges dieser Profile (dicke gestrichelte Linie in Fig. 1) zeigt, wird der Bereich B durch diese Profile gut erfasst.

Bei kleinen Auftriebsbeiwerten biegt diese Grenze allerdings zu kleineren Machzahlen ab, und hier werden die bekannten überkritischen Profile der ersten Generation ungünstiger als konventionelle Profile, so dass damit der Bereich A nicht erreicht werden kann.

Dieses Verhalten weisen z.B. die eingangs aufgeführten bekannten Profile auf. Es wird dadurch verursacht, dass beim Entwurf auf überkritische Druckverteilung nur die Profiloberseite berücksichtigt und dass die Profilunterseite so entworfen wird, dass bei unterkritischer Strömung ein möglichst hoher Auftrieb erreicht wird.

Dies ist wiederum nur durch eine sehr starke Belastung des hinteren Profilbereichs (Rear Loading) möglich. Die bekannten überkritischen Profile der ersten Generation weisen somit zwar eine hochliegende Grenze des Widerstandsanstieges auf, die jedoch infolge des «Rear-Loading-Effekts» mit einem grossen kopflastigen Nickmoment erkauft wird. Flugzeuge, die mit solchen Profilen ausgerüstet sind, können einmal den Profilauftrieb bis zur Grenzkurve nicht voll nutzen, da das kopflastige Nickmoment Trimmverluste verursacht, zum andern sollen diese Profile vom Entwurf her nur im Bereich nach Fig. 1 arbeiten. Bei kleinen Auftriebsbeiwerten wäre die Flugleistung dieser Flugzeuge sogar geringer als bei Ausrüstung mit konventionellen Profilen.

Wie aus Fig. 1 hervorgeht, wird die Buffetinggrenze (ausgezogene Linie) bei den bisher bekannten überkritischen Profilen relativ bald hinter der Grenze des Widerstandsanstieges erreicht. Wie kurz erwähnt, hat das Strömungsfeld im hinteren Profilbereich dann den grundsätzlichen Aufbau nach Fig. 1a. Dabei wird das Überschallfeld durch einen Verdichtungsstoss abgeschlossen, welcher kurz über der Profiloberfläche im allgemeinen in einen Gabelstoss übergeht. Dieser Stoss ist aber schon so stark und somit der Drucksprung schon so gross, dass die Grenzschicht dahinter zur Ablösung gebracht wird. Wie Fig. 1 ferner zeigt, fällt die Buffetinggrenze (ausgezogene Linie) der bekannten Profile mit zunehmender Machzahl schnell ab, so dass der nutzbare Auftrieb schnell zu Null wird. Da aber Flugzeuge in instationären Flugbewegungen leicht die Buffetinggrenze erreichen können und hierbei noch ein möglichst hoher Auftrieb erreicht werden soll, können die bekannten überkritischen Profile der ersten Generation hier nicht eingesetzt werden.

Das stossinduzierte Ablösen der Grenzschichtströmung nach Fig. 1a wäre dabei mit starkem Schütteln verbunden, und die Forderung nach einem gutmütigen Flugverhalten kann nicht erfüllt werden. In Fig. 1b ist eine Profilausbildung mit Einstellung eines Strömungsspaltes vorgesehen. Wie bereits beschrieben, wird mittels der Möglichkeit einer Spaltbildung die Forderung nach einem möglichst hohen, nutzbaren Auftrieb an der Buffetinggrenze bei gutmütigem Flugverhalten erfüllt. Gemäss Fig. 1b ist die Lage des Spaltes hinter dem Rekompressionsgebiet der Profiloberseite vorgesehen, wobei das Gebiet durch das Krümmungsmaximum und die beiden Wendepunkte abgegrenzt ist. Zur Spaltbildung kann sowohl eine verstellbare Abdeckung für Freigabe oder Abschluss des Spaltes als auch eine entsprechend verstellbare Hochauftriebsklappe Verwendung finden.

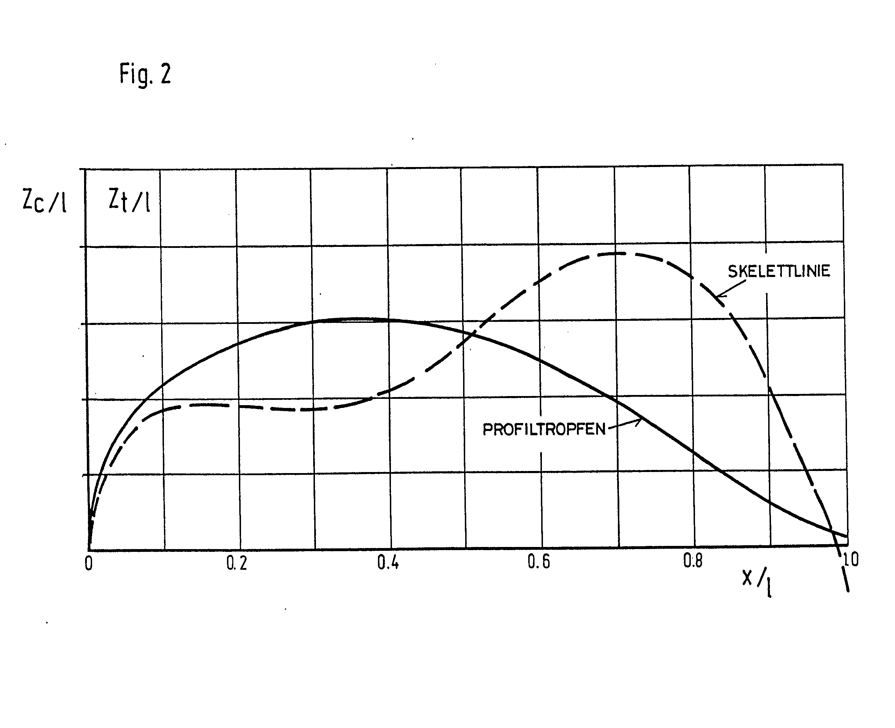

Fig. 2 zeigt den Profiltropfen und die Skelettlinie. Der Profiltropfen weist eine weiter hinten liegende Stelle der maximalen Dicke auf als z.B. DE-OS 2 712 717. Dadurch werden einmal ein günstigeres Widerstandsverhalten bei hoher Machzahl und etwa Nullauftrieb erreicht, dann ist auch eine gewichtsgünstigere Unterbringung von Hinterkantenklappen möglich (nach Fig. 1b), da eine grössere Bauhöhe zur Verfügung steht. Die Skelettlinie weist im Vergleich zu dem obigen, bekannten Profil eine stärkere Nasenwölbung und eine geringere Hinterkantenwölbung auf.

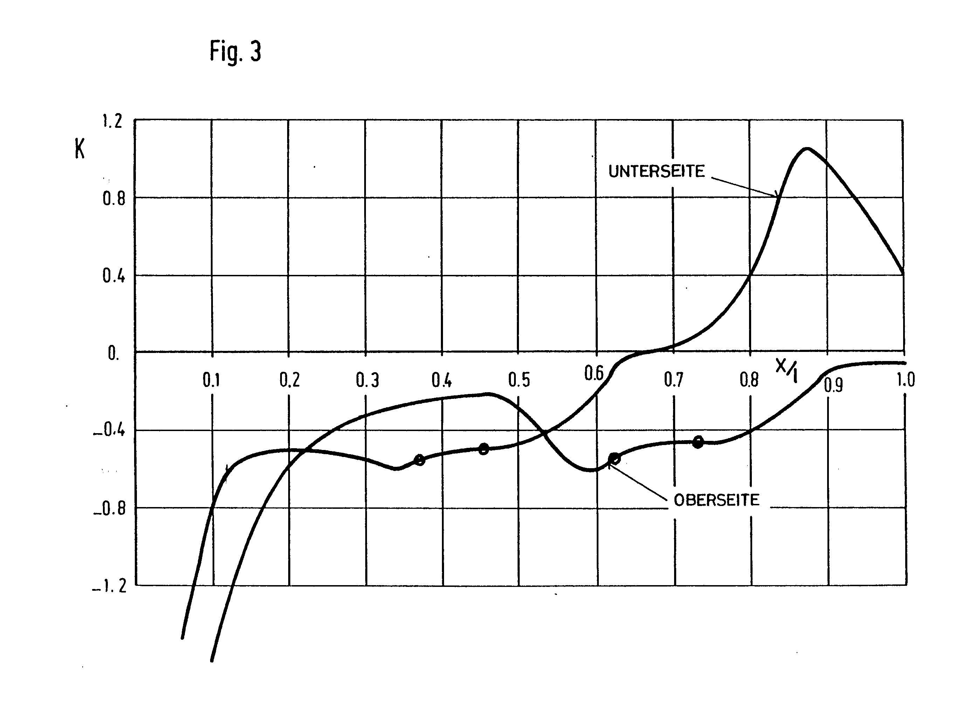

Fig. 3 gibt die Krümmungsverläufe der Profilober- und Profilunterseite wieder. Daraus gehen insbesondere die Rekompressionsbereiche hervor, welche auf der Profilober- und Profilunterseite die gleichen Merkmale aufweisen, nämlich ein ausgeprägtes Krümmungsmaximum und zwei in geringem Abstand folgende Wendepunkte. Auf der Unterseite beträgt dieses Maximum 0,6 bei 34% Profiltiefe, auf der Oberseite ebenfalls 0,6 bei 59% Profiltiefe. Auf der Unter- und Oberseite folgt der erste Wendepunkt im Abstand von 2% bis 5% der Flügeltiefe und der zweite Wendepunkt im Abstand von 10% bis 16% der Flügeltiefe. Vor diesem Maximum ändert sich die Krümmung wenig, so dass sie auf der Unterseite im Bereich von 12,5% bis 34% der Flügeltiefe Werte zwischen −0,5 und −0,6 annimmt und auf der Oberseite im Bereich von 26% bzw. 53% der Flügeltiefe Werte zwischen −0,2 und −0,4.

Bei 22% der Profiltiefe tritt eine Überschneidung der Krümmungsverläufe auf, so dass davor die Krümmung der Nasenunterseite geringer ist als die der Nasenoberseite. Diese Ausbildung zusammen mit einem weiteren Krümmungsmaximum von nur 1,05 auf der Unterseite bei 87,5% Flügeltiefe bewirkt eine wesentliche Reduzierung des kopflastigen Nickmomentes gegenüber den bekannten überkritischen Tragflügelprofilen der ersten Generation.

Der Krümmungsverlauf im Nasenbereich nach Fig. 3 stellt in Verbindung mit der Nasenwölbung nach Fig. 2 eine für das Hochauftriebsverhalten günstige Profilnasenform dar.

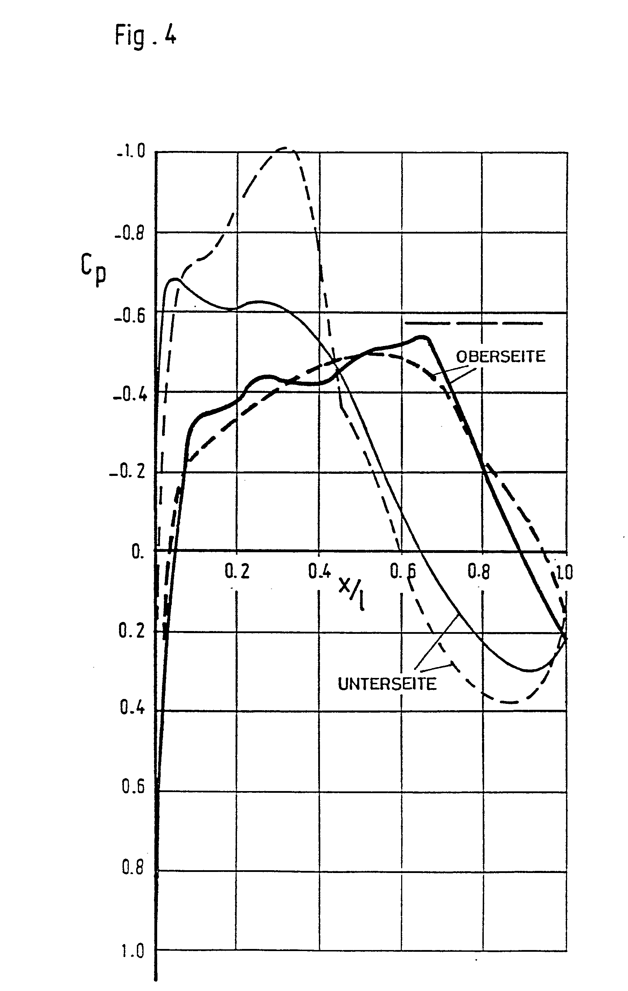

Die Figuren 4 bis 6 zeigen eine Machzahlreihe bei etwa Nullauftrieb des vorliegenden Profils (ausgezogene Linie) im Vergleich mit bekannten Profilen wie z.B. der DE-OS 2 712 717 (gestrichelte Linie). Diese Druckverteilungen repräsentieren etwa den Bereich A nach Fig. 1.

Fig. 4 gilt für eine Machzahl etwas unterhalb der Auslegemachzahl (0,76). Während das vorliegende Profil noch keine Stösse aufweist, ist bei dem Vergleichsprofil auf der Unterseite schon ein sehr starker Stoss vorhanden. Eine Druckverteilung dieses Typs ist also die Ursache dafür, dass der Bereich A von bekannten überkritischen Profilen nicht erreicht werden kann.

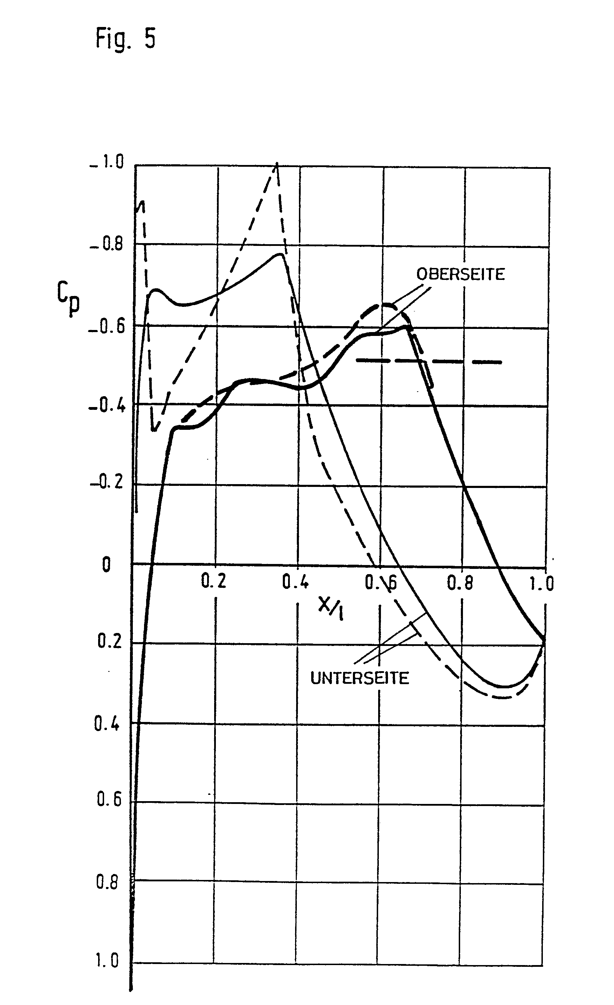

Fig. 5 zeigt die Verhältnisse bei einer Machzahl oberhalb des Auslegewertes (0,78). Auf der Unterseite hat sich ein Verdichtungsstoss gebildet. Im Vergleich zu dem des Vergleichprofils ist er jedoch schwach, da der Drucksprung nur etwa halb so gross ist.

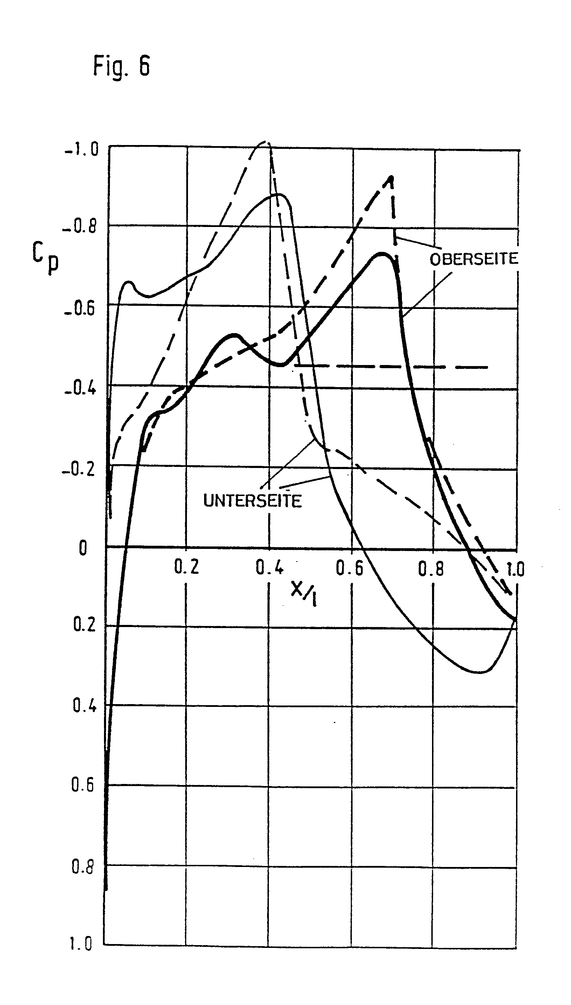

Bei der höchsten Machzahl (0,8) nach Fig. 6 ist der Stoss entsprechend stärker, die Strömung ist dahinter jedoch noch normal anliegend, während beim Vergleichsprofil der Stoss so stark ist, dass die Strömung an der hinteren Profilhälfte völlig abgelöst ist.

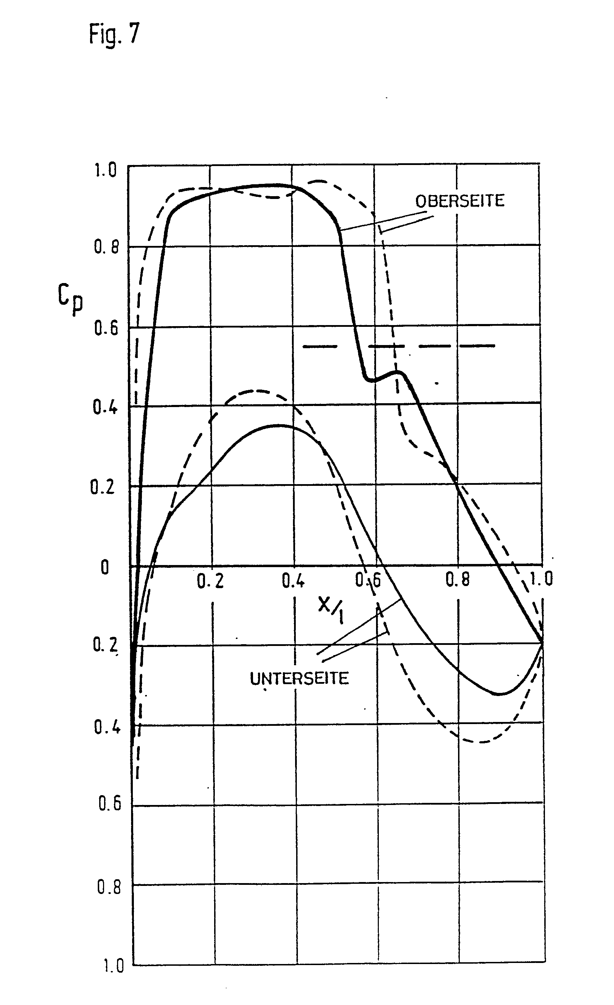

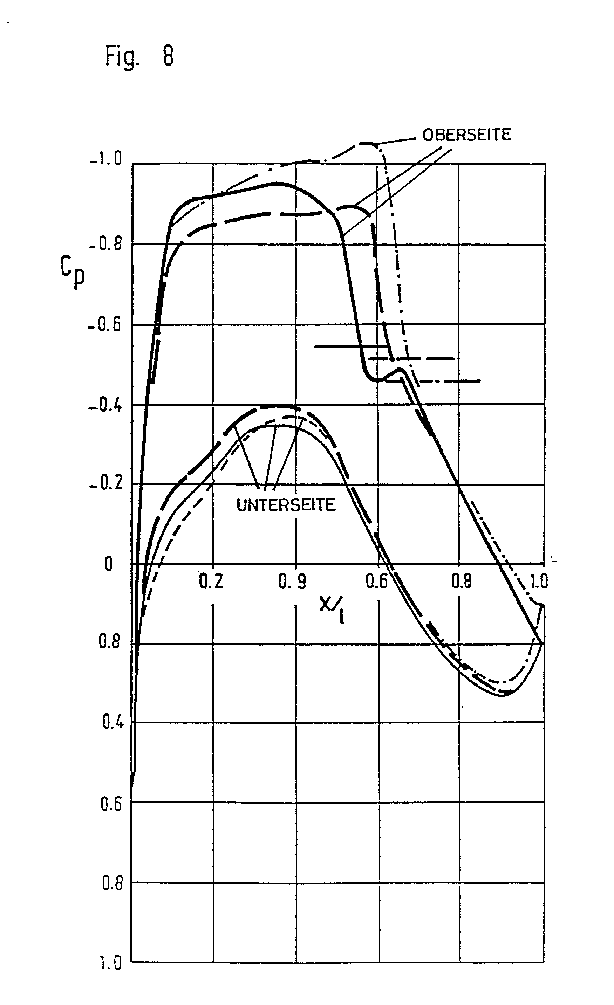

Die Figuren 7 und 8 zeigen einige Beispiele von Druckverteilungen aus dem Bereich B nach Fig. 1, und zwar zeigt Fig. 7 eine typische Druckverteilung in der Nähe des Auslegungspunktes bekannter überkritischer Profile (ausgezogene Linien: Anmeldungsgegenstand) und ein Vergleichsprofil (gestrichelte Linien: DE-OS 2 712 717). Hieraus gehen insbesondere die Unterschiede hervor, die zur Reduzierung des kopflastigen Nickmomentes beitragen, nämlich die Ausbildung der Unterseite, so, dass der hintere Bereich entlastet und der vordere stärker belastet wird, Durch diese Massnahmen wird das kopflastige Nickmoment um etwa 30% verringert.

Fig. 8 gibt einige Beispiele aus dem Bereich B nach Fig. 1 bei aufsteigender Machzahl an (M = 0,77 ausgezogene Linie; 0,78 gestrichelte Linie; 0,80 strichpunktierte Linie). Die Wanderung des Stosses ist gering. Dies gilt sowohl für die Oberseite nach Fig. 8 als auch für die Unterseite nach den Figuren 4 bis 6.

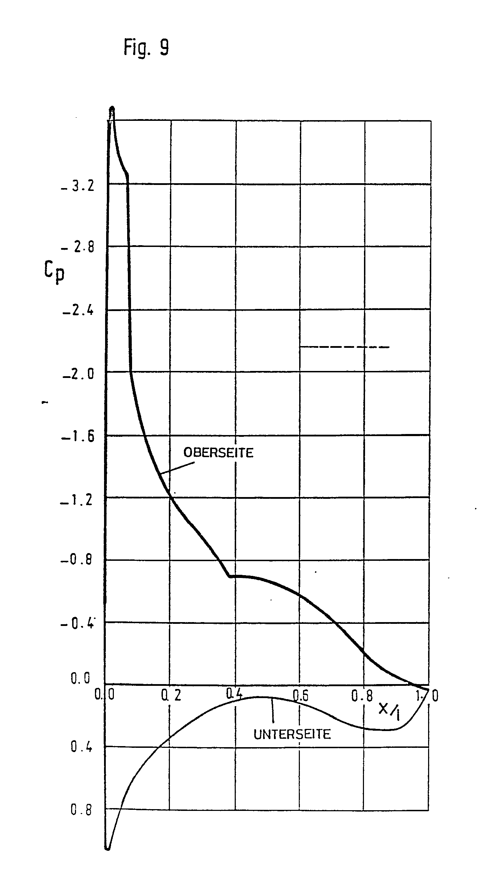

Durch die Überschneidung der Krümmungsverläufe im vorderen Bereich nach Fig. 3 wird eine günstige Nasenform ermöglicht, welche sich vorteilhaft auf das Hochauftriebsverhalten im Niedergeschwindigkeitsbereich auswirkt. Als Beispiel zeigt Fig. 9 eine Druckverteilung beim Maximalauftrieb. Der bei dieser Machzahl (0,5) noch erreichbare Auftriebsbeiwert (etwas über 1,1) ist recht hoch (ohne Spaltanordnung).

Durch die Möglichkeit der Spaltbildung nach Fig. 1b wird eine beträchtliche Erhöhung des nutzbaren Auftriebes an der Buffetinggrenze bei verringertem Schütteln und verbessertem Flugverhalten erreicht. Je nach der Spaltausbildung bzw. der Stellung der Spaltklappen nach Fig. 1b können noch bedeutend höhere Werte erreicht werden, als die strichpunktierte Linie in Fig. 1 angibt.

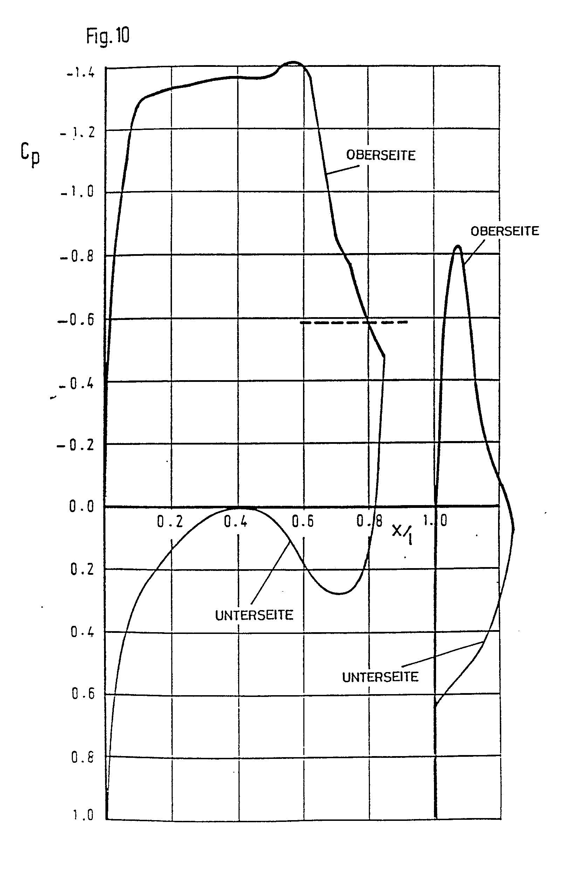

So zeigt Fig. 10 eine Druckverteilung im Hochgeschwindigkeitsbereich entsprechend dem Strömungsbild in Fig. 1b. Bei der Machzahl von 0,75 wird dabei noch ein Auftriebsbeiwert von 1,3 erreicht. Der Spalt liegt dabei entsprechend der Fig. 1b hinter dem Rekompressionsgebiet mit dem Stoss, und die Strömung an der Klappenoberseite ist noch weitgehend anliegend. Im Hochgeschwindigkeitsbereich ist der maximal erreichbare Auftriebsbeiwert etwa 1,5. Im Niedergeschwindigkeitsbereich ist eine solche Spalt- bzw. Klappenanordnung ebenfalls günstig. Dabei wird ein maximaler Auftriebsbeiwert von etwa 2,5 erreicht.

In der Zusammenfassung ist zu erkennen, dass sich die Entwurfsforderungen der Bereiche A und B nach Fig. 1 widersprechen, da im Bereich A ein völlig symmetrisches Profil optimal wäre und im Bereich B ein stark gewölbtes. Wenn ein Profil beide Bereiche abdecken soll, kann mit ihm das jeweilige Optimalprofil in seiner Leistung natürlich nicht ganz erreicht werden.

Durch Anwendung der angegebenen Konturmerkmale ist es jedoch möglich, wie Fig. 1 zeigt, ein beidseitig wirkendes überkritisches Tragflügelprofil der zweiten Generation herzustellen, das sowohl dem optimalen konventionellen als auch dem optimalen überkritischen Profil sehr nahe kommt, so dass die Stossstärke und Stosswanderung im interessierenden Anstell- und Machzahlbereich sowohl auf der Profilunter- als auch auf der Profiloberseite gering ist. Da das kopflastige Nickmoment durch die angegebenen Merkmale um etwa 30% verringert wird, ist der Abstand zum optimalen überkritischen Profil noch geringer, denn bei diesem müsste ein grösserer Trimmverlust in Kauf genommen werden. Die angegebene Kontur ist auch für das Niedergeschwindigkeitsverhalten günstig.

Durch den einstellbaren Spalt wird die beschriebene bedeutende Verbesserung an der Buffetinggrenze erreicht.

**Patentansprüche**

1. Profil, insbesondere Tragflügelprofil für Luftfahrzeuge, ausgehend von einer Auslegungsmachzahl zwischen 0,2 und 0,9 und im Hochgeschwindigkeitsbereich mit einem nutzbaren Auftriebsbeiwert zwischen −01 und 1,5 bzw. im Niedergeschwindigkeitsbereich mit einem Auftriebsbeiwert bis 2,5, wobei

a) an der Profiloberseite auf dem Konturbereich von angenähert 26% bis 53% der Profiltiefe, längs dem Überschallgeschwindigkeit der Strömung auftreten kann, die Krümmung sich im Bereich von −0,2 bis −0,4 ändert, dass ferner an der Profilunterseite auf dem Konturbereich von angenähert 12,5% bis 34% der Profiltiefe, auf dem Überschallgeschwindigkeit der Strömung auftreten kann, die Krümmung sich im Bereich von −0,5 bis −0,6 ändert, dass

b) an diese Bereiche jeweils Rekompressionsbereiche mit je einem deutlichen Krümmungsmaximum von angenähert K = −0,6 anschliessen und dass dieses Krümmungsmaximum auf der Oberseite angenähert bei 57% der Profiltiefe und auf der Unterseite angenähert bei 34% der Profiltiefe liegt und dass sowohl an der Profilober- als auch an der Profilunterseite der jeweilige Rekompressionsbereich je zwei Wendepunkte des Krümmungsverlaufs enthält, wobei sowohl an der Profilober- als auch an der Profilunterseite der erste Krümmungswendepunkt im Abstand von angenähert 2% bis 5% der Profiltiefe hinter dem genannten Krümmungsmaximum liegt, und dass der zweite Krümmungswendepunkt im Abstand von angenähert 10% bis 16% der Profiltiefe hinter dem genannten Krümmungsmaximum liegt, und dass

c) im Anschluss an das Rekompressionsgebiet der Profiloberseite ein unter Reiseflugbedingungen geschlossener und unter Manöverflug- bzw. Langsamflugbedingungen geöffneter Strömungsspalt einstellbar ist.

2. Tragflügelprofil nach Anspruch 1, dass bei angenähert 22% der Profiltiefe eine Überschneidung der Krümmungsverläufe von Profilober- und Profilunterseite vorliegt, derart, dass davor die Krümmung der Profiloberseite stärker ist als die der Profilunterseite.

3. Tragflügelprofil nach Anspruch 1 oder 2, wobei ein weiteres Krümmungsmaximum auf der Profilunterseite im hinteren Bereich der Profiltiefe bei angenähert 87% liegt und 1.05 beträgt.

4. Tragflügelprofil nach Anspruch 1 bis 3, wobei im Zusammenhang mit der Spaltbildung eine Spaltklappe verwendet ist, die sowohl im Hochals auch im Niedergeschwindigkeitsbereich in eine durch Translation und bzw. oder Rotation bestimmte Wirkstellung verstellbar ist.

**Claims**

1. A section, in particular an aerofoil section for aircraft, starting from a design mach number of from 0.2 to 0.9 and an effective lift coefficient of from −0.1 to 1.5 in the high speed range and of up to 2.5 in the low speed range, wherein:

a) on the section upper side, in the contour region of approximately 26% to 53% of the section depth, along which flow at supersonic speed may occur, the curbature changes in the range of from −0.2 to −0.4, wherein, further, on the profile underside, in the contour region of approximately 12.5% to 34% of the section depth, on which flow at supersonic speed may occur, the curvature changes in the range of from −0.5 to −0.6, and wherein

b) these regions are in each case followed by regions of recompression each having a distinct curvature maximum of approximately K = −0.6 and this curvature maximum is situated at approximately 57% of the section depth on the upper side and at approximately 34% of the section depth on the underside, and both on the section upper side and on the section underside the recompression range contains two turning points in the path of the curvature, and both on the section upper side and on the section underside the first curvature turning point is situated at a distance of approximately 2% to 5% of the section depth behind the said curvature maximum, and the second curvature turning point is situated at a distance of approximately 10% to 16% of the section depth behind the said curvature maximum, and

c) a flow slot which is closed under cruising conditions and opened under conditions of manoeuvring and slow flight can be adjusted in a position following upon the recompression region of the profile upper side.

2. An aerofoil section according to claim 1, wherein the path of curvature of the section upper side and section underside intersect at approximately 22% of the section depth so that in front of the intersection the curvature of the profile upper side is more pronounced than that of the profile underside.

3. An aerofoil section according to claim 1 or claim 2, wherein a further curvature maximum is situated on the profile underside in the rear region of the section depth at approximately 87% and amounts to 1.05.

4. An aerofoil section according to claim 1 to 3, wherein a slotted flap is used in conjunction with the slot formation, which flap can be adjusted both in the high speed and in the low speed range to a particular operative position determined by translation and/or rotation.

## Revendications

1. Profil, notamment profil d'aile portante pour aéronef, dont le nombre de Mach de conception est compris entre 0,2 et 0,9 et le coefficient de portance utile est situé dans une plage allant de −0,1 à 1,5 dans le domaine des grandes vitesses et allant respectivement jusqu'à 2,5 dans le domaine des basses vitesses, dans lequel:

a) sur le côté supérieur du profil et dans la région du contour allant d'approximativement 26% à 53% de la profondeur du profil, le long duquel peut apparaître une vitesse supersonique de l'écoulement, la courbure se modifie dans une plage allant de −0,2 à −0,4, en outre sur le côté inférieur du profil, dans la région du contour allant approximativement de 12,5% à 34% de la profondeur du profil, sur laquelle peut apparaître une vitesse supersonique de l'écoulement, la courbure se modifie dans la plage de −0,5 à −0,6,

b) à ces régions se raccordent chaque fois les régions de recompression avec chacun un maximum de courbure marqué d'approximativement K=−0,6 et en ce que ce maximum de courbure sur le côté supérieur est approximativement de 57% de la profondeur du profil et sur le côté inférieur d'approximativement 34% de la profondeur du profil, et aussi bien sur le côté supérieur que sur le côté inférieur du profil la région respective de la recompression comprend chacune deux points d'inflexion de la courbure, le premier point d'inflexion de la courbure aussi bien sur le côté supérieur que sur le côté inférieur du profil étant situé à une distance d'environ 2% à 5% de la profondeur du profil à l'arrière du maximum de courbure mentionné, et le second point d'inflexion de la courbure est situé à une distance d'approximativement 10% à 16% de la profondeur du profil à l'arrière du maximum de courbure mentionné, et

c) à la suite de la région de recompression sur le côté supérieur du profil est prévu une fente réglable de passage de l'écoulement qui est fermée en vol de croisière et est ouverte en cas de manœuvres et de vol lent.

2. Profil d'aile portante selon la revendication 1, dans lequel une intersection des courbures du côté supérieur du profil et du côté inférieur du profil apparaît approximativement à 22% de la profondeur du profil, de telle sorte qu'à l'avant la courbure supérieure du profil soit plus prononcée que celle du côté inférieur du profil.

3. Profil d'aile portante selon la revendication 1 ou 2, dans lequel un autre maximum de courbure est situé sur le côté inférieur du profil à environ 87% dans la région arrière de la profondeur du profil et est de 1,05.

4. Profil d'aile portante selon l'une quelconque des revendications 1 à 3, dans lequel l'on utilise, pour la formation d'une fente, un volet à fente qui peut être réglé, aussi bien dans la plage des hautes vitesses que dans celle des basses vitesses, dans une position active déterminée par translation et/ou rotation.

Fig. 1

Fig. 1a

Fig. 1b

Fig. 2

SKELETTLINIE

PROFILTROPFEN

$Z_c/l$   $Z_t/l$

0      0.2      0.4      0.6      0.8      1.0

$x/l$

0 076 907

Fig. 3

0 076 907

Fig . 4

# Fig. 5

Fig. 6

Fig. 7

Fig. 8

Fig. 9

Fig. 10